# EUROPEAN PATENT APPLICATION

(11) **EP 3 695 965 A1**
(43) Date of publication of application: **19.08.2020**
(21) Application number: 18865744.9
(22) Date of filing: 09.10.2018
(51) Int. Cl.: B32B 27/30, B32B 27/36, C08F 2/50, C08F 290/06

(54) **SURFACE-MODIFIED FILM FOR AUTOMOTIVE INTERIOR/EXTERIOR COMPONENTS**

(30) Priority: 11.10.2017 JP 2017197940
(71) Applicant: JNC Corporation, Chiyoda-ku Tokyo 100-8105 (JP)
(72) Inventor: SATO, Shino, Ichihara-shi Chiba 290-8551 (JP); ITO, Kenya, Ichihara-shi Chiba 290-8551 (JP)
(74) Representative: Becker, Eberhard
(86) International application number: PCT/JP2018/037540
(87) International publication number: WO 2019/073952

(57) **Abstract**

[Problem] To produce an automotive interior/exterior component having excellent functionality and design properties. [Solution] A surface-modified film for automotive interior/exterior components in which a surface protection layer is layered on one surface of a polycarbonate substrate film, the surface protection layer is a cured product of a photopolymerizable urethane acrylate composition, the photopolymerizable urethane acrylate composition contains (A) a photopolymerizable urethane acrylate mixture, (C) a photopolymerization initiator, and, if necessary, (B) a filler, and the (A) component contains (a1) a photopolymerizable urethane acrylic polymer, (a2) a polyfunctional acrylate compound, (a3) a fluorine-containing photopolymerizable acrylic compound, and (a4) a photopolymerizable acrylate oligomer having a fluorosilsesquioxane derivate unit.

## Description

### Technical Field

The invention relates to a laminated film used as a molding material of automotive interior and exterior parts.

### Background Art

The number of parts which constitutes one automobile is reported to be about 30,000. In the case of a gasoline vehicle or a diesel vehicle, engine parts account for only about 10,000 of all parts, and the rest of parts of about 20,000 includes automotive interior and exterior parts relating to structure maintenance of a body, driving control, safety ensuring, decoration and so forth. The engine parts are foreseen to be replaced by only about 100 pieces of batteries and motor parts by widespread use of an electric vehicle, but the number of automotive interior and exterior parts common to the gasoline vehicle and the electric vehicle is foreseen to have no noticeable change. Accordingly, regardless of widespread use of the electric vehicle, development demand of the automotive interior and exterior parts never declines.

Furthermore, the automotive interior and exterior parts are parts which easily catch people's eyes and contacted by a crew with high frequency, and therefore are sites required to have performance and designability in any kinds of vehicles. Today, a price of a hybrid vehicle or an electric vehicle in which development competition between automobile manufacturers is intense is set to a level comparatively higher than the price of the gasoline vehicle, and therefore the automotive interior and exterior parts of the above kinds of vehicles are often required to have particularly high quality fit to a purchasing group who is a high-end customer or has high brand awareness.

From such a circumstance, achievement of high performance and high designability of the automotive interior and exterior parts may be referred to as a still larger object in automobile manufacturing in the future.

Specific examples of the automotive interior and exterior parts which particularly easily catch people's eyes include an instrument panel, a seat, a console box, a sun visor, a pillar trim, a door trim, a radiator grill, an emblem, various garnishes, a wheel cap, a grill illumination and covers inside and outside a vehicle. Above all, a so-called "decorative part" such as the instrument panel, the emblem, the radiator grill and the garnish is a part which is most easily recognized by a driver and a passerby, and therefore is required to have a distinct design and particularly high quality for each kind of vehicle. Most of the automotive interior and exterior parts are mainly composed of a thin and bent plastic material, and is produced by injection molding or a method in combining injection molding with coating or laminate molding. Among such methods, a method of injecting a flowable plastic material into an injection molding machine to mold the material into a thin and bent shape (in-mold molding) is one of basic methods, and a great number of molding methods described in Patent literature Nos. 1, 2, 3 and 4 are known, for example.

A great number of attempts for improving a molding material itself are made in order to improve quality of the automotive interior and exterior parts. Specific examples of optimization of a polycarbonate resin and an acrylic resin typical as a material of an automobile decorative part are described in Patent literature Nos. 5, 6, 7 and 8, for example. An objective of the examples of optimization is to improve scratch resistance, transparency, impact resistance, heat resistance, chemical resistance, and bending whitening resistance of a molded article to be obtained.

Patent literature Nos. 5 and 6 describe sunscreen cream resistance as recent required performance for the automotive interior and exterior parts. A skin care product such as a hand cream and a sunscreen cream adheres to a hand of the crew of the automobile or a person approaching the automobile with high frequency, and therefore after an automobile product is delivered to a purchaser, such a skin care product adheres to the automotive interior and exterior parts with high frequency. Therefore, the skin care product is unable to be ignored as a causative agent of deterioration of quality of the automotive interior and exterior parts. Thus, in recent years, as a factor causing deterioration of quality of the automotive interior and exterior parts, in addition to a stimulus in a natural world, such as a weather and an insect, stain by contact with a user has been also examined. Also from such a circumstance, a level required from a market for the automotive interior and exterior parts is understandable to be in a further increasing trend.

Meanwhile, the present applicant has already proposed in Patent literature No. 9 that a surface-modified molded article is produced by installing a stain-proof film previously formed on a surface of a molded body by in-mold molding. Patent literature No. 9 also describes that such a stain-proof film can also be expected to have a function to decorate a molded article, and specific examples of the molded article that can be decorated include an automobile part.

However, the objects to be decorated described in Patent literature No. 9 are only a list of possibilities, and automobile parts are indefinitely mentioned as one of industrially mass-produced molded products required to have a certain level of performance and designability today along with a mobile telephone terminal, a notebook PC, a digital camera, home electronics, a cosmetic container and so forth. Patent literature No. 9 discloses neither a specific proposal about a material of a stain-proof film suitable for surface modification and decoration of the automobile parts nor description of verifying that any surface-modified and decorated automobile part has performance and designability satisfying a requirement from a market. Therefore, disclosure in Patent literature No. 9 has only indefinitely proposed a new means for surface modification and decoration of the automotive interior and exterior parts, and has not reached an effective improved technology of the automobile parts at all.

### Citation List

### Patent Literature

Patent literature No. 1: JP 2008-37026 A.
Patent literature No. 2: JP 2009-96241 A.
Patent literature No. 3: JP 2001-341173 A.
Patent literature No. 4: JP 2016-533920 A.
Patent literature No. 5: JP 2010-18720 A.
Patent literature No. 6: JP 2009-235236 A.
Patent literature No. 7: JP 2017-8140 A.
Patent literature No. 8: JP 2013-133361 A.
Patent literature No. 9: JP 6011529 B.

### Summary of Invention

### Technical Problem

Then, the present applicant has attempted optimization of a material and a structure of a stain-proof film aiming at breaking through, to a practicable technology, a surface modification and surface decoration technology of automobile part formed body, which has been proposed by the present applicant.

### Solution to Problem

As a result, the present applicant has succeeded in finding an optimum formulation and combination that can meet requirements from a market from among a vast amount of options regarding a material and a structure of a stain-proof film. More specifically, the invention is as described below.
Item 1. A surface-modified film for automotive interior and exterior parts, in which a surface protective layer is laminated on one side of a polycarbonate base material film, wherein
   the surface protective layer is a cured product of a photopolymerizable urethane acrylate composition,
   the photopolymerizable urethane acrylate composition contains photopolymerizable urethane acrylate mixture (A), photopolymerization initiator (C), and further, when necessary, filler (B),
   in the photopolymerizable urethane acrylate mixture, photopolymerizable urethane acrylate mixture (A) is present at a proportion of 60 parts by weight or more and 100 parts by weight or less, and filler (B) is present at a proportion of 0 parts by weight or more and 40 parts by weight or less, based on a total of 100 parts by weight of photopolymerizable urethane acrylate mixture (A) and filler (B),
   photopolymerizable urethane acrylate mixture (A) contains photopolymerizable urethane acrylic polymer (a1), polyfunctional acrylate compound (a2), fluorine-containing photopolymerizable acrylic compound (a3) and photopolymerizable acrylate oligomer having a unit derived from a fluorosilsesquioxane derivative (a4) represented by formula (1), and
   component (a1) is present at a proportion of 25 parts by weight or more and 87.99 parts by weight or less, component (a2) is present at a proportion of 1 part by weight or more and 20 parts by weight or less, component (a3) is present at a proportion of 1 part by weight or more and 10 parts by weight or less, and component (a4) is present at a proportion of 0.01 part by weight or more and 5 parts by weight or less, based on 100 parts by weight of photopolymerizable urethane acrylate mixture (A). 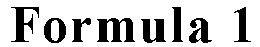 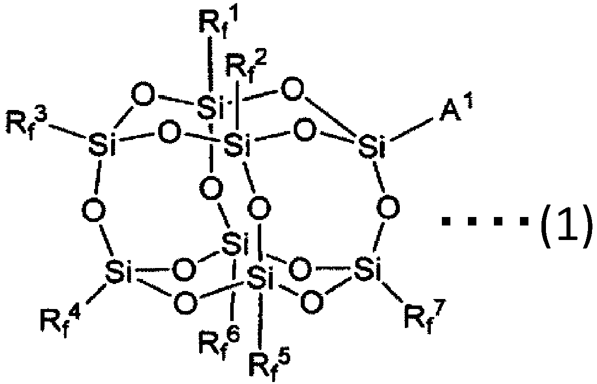
   In formula (1), R_{f}¹ to R_{f}⁷ are independently straight-chain or branched-chain fluoroalkyl having 1 to 20 carbons in which at least one methylene may be replaced by oxygen; fluoroaryl having 6 to 20 carbons in which at least one hydrogen is replaced by fluorine or trifluoromethyl; or fluoroarylalkyl having 7 to 20 carbons in which at least one hydrogen in aryl is replaced by fluorine or trifluoromethyl, and A¹ is a group represented by formula (1-1) or formula (1-2). 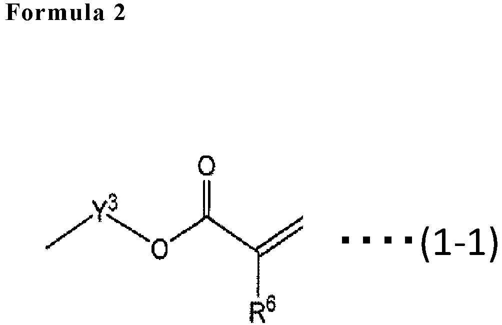
   In formula (1-1), Y³ is alkylene having 2 to 10 carbons, and R⁶ is hydrogen or straight-chain or branched-chain alkyl having 1 to 5 carbons or aryl having 6 to 10 carbons. 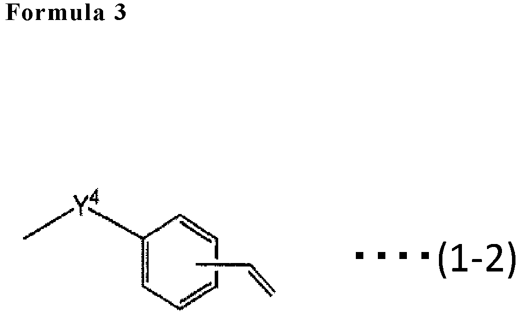
   In formula (1-2), Y⁴ represents a single bond or alkylene having 1 to 10 carbons.
Item 2. The surface-modified film for automotive interior and exterior parts according to item 1, wherein, in the photopolymerizable urethane acrylate composition, photopolymerizable urethane acrylate mixture (A) is present at a proportion of 60 parts by weight or more and 90 parts by weight or less, and filler (B) is present at a proportion of 10 parts by weight or more and 40 parts by weight or less, based on a total of 100 parts by weight of photopolymerizable urethane acrylate mixture (A) and filler (B).
Item 3. The surface-modified film for automotive interior and exterior parts according to item 1 or 2, wherein component (a4) is a photopolymerizable acrylate oligomer having a unit derived from γ-methacryloxypropylhepta(trifluoropropyl)-T8-silsesquioxane represented by formulas (1-3). 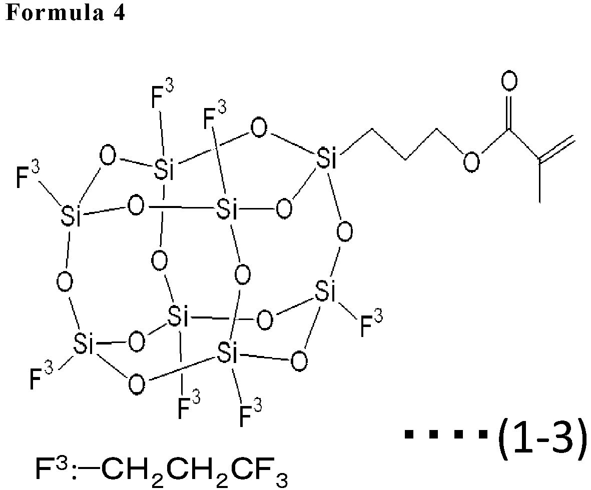
Item 4. The surface-modified film for automotive interior and exterior parts according to any of items 1 to 3, wherein the automotive interior and exterior parts are selected from an instrument panel, an emblem, a radiator grill and various garnishes.
Item 5. Automotive interior and exterior parts, in which at least a part of a surface is coated with the surface-modified film for automotive interior and exterior parts according to any of items 1 to 4.

### Advantageous Effects of Invention

A surface-modified film for automotive interior and exterior parts of the invention (hereinafter referred to as a "modified film") has oil repellency, stain-proof properties, water repellency, sunscreen cream resistance, insect repellent spray resistance, high surface hardness, scratch resistance, high-temperature and high-humidity resistance and formability in a well-balanced manner. Automotive interior and exterior parts, in which at least a part of a surface is coated with the modified film of the invention, have oil repellency, stain-proof properties, water repellency, sunscreen cream resistance, insect repellent spray resistance, high surface hardness, scratch resistance, high-temperature and high-humidity resistance and formability in a well-balanced manner.

### Brief Description of Drawings

Fig. 1 shows a modified film in Example 1, in which a cross-cut test (evaluation (8) described later) is conducted.
Fig. 2 shows a modified film in Comparative Example 1, in which the cross-cut test (evaluation (8) described later) is conducted.
Fig. 3 shows the modified film in Example 1, in which a formability test (evaluation (9) described later) is conducted.
Fig. 4 shows the modified film in Comparative Example 2, in which the formability test (evaluation (9) described later) is conducted.

### Description of Embodiments

A modified film of the invention is a film in which a surface protective layer formed of a cured product of a photopolymerizable urethane acrylate composition containing photopolymerizable urethane acrylate mixture (A), photopolymerization initiator (C), and further, when necessary, filler (B) is laminated on one side of a polycarbonate base material film. Hereinafter, a material used for the surface protective layer will be described in detail.

### Photopolymerizable urethane acrylate mixture (A)

Photopolymerizable urethane acrylate mixture (A) used in the invention, which is a main component of the photopolymerizable urethane acrylate composition, contains photopolymerizable urethane acrylic polymer (a1), polyfunctional acrylate compound (a2), fluorine-containing photopolymerizable acrylic compound (a3) and photopolymerizable acrylate oligomer having a unit derived from a fluorosilsesquioxane derivative (a4). Hereinafter, components (a1), (a2), (a3) and (a4) will be described in detail.

### Photopolymerizable urethane acrylic polymer (a1)

The photopolymerizable urethane acrylic polymer is a reactive polymer being industrially often used. A molecule thereof has about thousands to hundreds of thousands of weight average molecular weight with a rigid acrylic oligomer chain and a flexible urethane oligomer chain as an indispensable constitutional unit. When such a photopolymerizable urethane acrylic polymer is used for a primer of a coating material or functionarization of a surface of a molded article, a photopolymerizable urethane acrylic polymer in a solution state is applied on an object, and then the coating is cured (photopolymerized) by light energy such as ultraviolet light. In the process of photopolymerization, an acryloyl group that is present in a molecular terminal of the photopolymerizable urethane acrylic polymer reacts with another acryloyl group in a reaction system to extend a molecular chain, and the urethane acrylic polymer having increased molecular weight, which combines strength derived from an acrylic oligomer chain and flexibility derived from a urethane oligomer chain, adheres to an object to be applied. In general, strength and flexibility of the coating are adjusted by selecting a molecular structure and molecular weight of the photopolymerizable urethane acrylic polymer.

As photopolymerizable urethane acrylic polymer (a1) constituting photopolymerizable urethane acrylate mixture (A) of the invention, among the photopolymerizable urethane acrylic polymers as described above, a polymer usable for a coating material or as a coating agent can be used without limitation. As such photopolymerizable urethane acrylic polymer (a1), for example, "Heat curable Silicone-Acrylic Polymer 8BR series" made by Taisei Fine Chemical Co., Ltd., "UNIDIC" made by DIC Corporation, "Hitaloid" made by Hitachi Chemical Co., Ltd., "RUA series" made by Asia Chemical Industry Co., Ltd. and the like can be used.

### Polyfunctional acrylate compound (a2)

The polyfunctional acrylate compound is a monomer having a plurality of photopolymerizable groups in one molecule, obtained by a condensation reaction of polyhydric alcohol and various acrylic acid-based compounds, and is often industrially used as one of photopolymerizable polymeric materials. A crosslinking structure can be introduced into urethane acrylate molecules simultaneously with extension of a molecular chain of urethane acrylate by light-curing a photopolymerizable polymer such as photopolymerizable urethane acrylate in the presence of the polyfunctional acrylate compound. Thus, the polyfunctional acrylate compound is used for adjustment of molecular weight and strength of a cured product of the photopolymerizable polymer such as a photopolymerizable urethane acrylic polymer.

As polyfunctional acrylate compound (a2) constituting photopolymerizable urethane acrylate mixture (A) of the invention, the polyfunctional acrylate compound as described above can be used without limitation. As such polyfunctional acrylate compound (a), photocurable acrylate made by Shin-Nakamura Chemical Co., Ltd., "KAYARAD" made by Nippon Kayaku Co., Ltd., "ARONIX (registered trademark)" made by Toagosei Co., Ltd., polyfunctional acrylate made by TOMOE Engineering Co., Ltd., polyfunctional acrylate made by Kyoeisha Chemical Co., Ltd. and the like can be used, for example.

### Fluorine-containing photopolymerizable acrylic compound (a3)

Photopolymerizable urethane acrylate mixture (A) used in the invention further contains fluorine-containing photopolymerizable acrylic compound (a3) in order to provide the surface protective layer with significant stain-proof properties and water repellency. As fluorine-containing photopolymerizable acrylic compound (a3) of the invention, a so-called fluorine-containing acrylic polymer in which a fluorine atom or a fluorine-containing group is introduced into a photopolymerizable acrylic oligomer and monomer, including the photopolymerizable urethane acrylic polymer and the polyfunctional acrylate compound as described above, can be used without limitation. As such fluorine-containing photopolymerizable acrylic compound (a3), "LE-600" made by Toshin Kagaku co., Ltd., "VISCOAT 8FM" made by OSAKA ORGANIC CHEMICAL INDUSTRY LTD., "MEGAFAC RS" made by DIC Corporation, "Fclear (registered trademark)" made by Kanto Denka Kogyo Co., Ltd. and the like can be used, for example.

### Photopolymerizable acrylate oligomer having a unit derived from a fluorosilsesquioxane derivative (a4)

Photopolymerizable acrylate oligomer having a unit derived from a fluorosilsesquioxane derivative (a4) used in the invention is a photopolymerizable oligomer contributing to improvement in stain-proof properties, developed by the present applicant. The fluorosilsesquioxane derivative is a compound represented by formula (1).

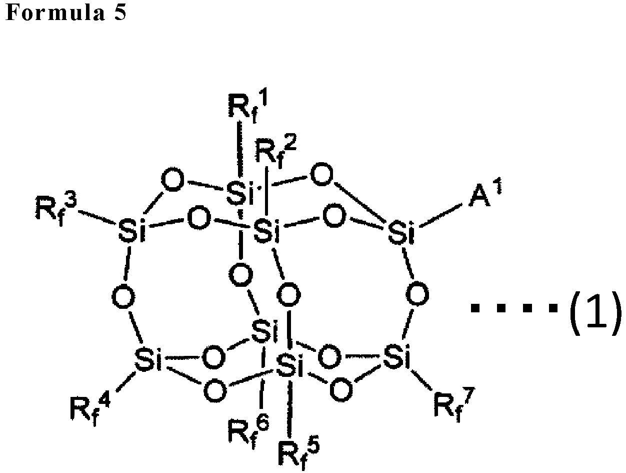

In formula (1), R_{f}¹ to R_{f}⁷ are independently straight-chain or branched-chain fluoroalkyl having 1 to 20 carbons in which at least one methylene may be replaced by oxygen; fluoroaryl having 6 to 20 carbons in which at least one hydrogen is replaced by fluorine or trifluoromethyl; or fluoroarylalkyl having 7 to 20 carbons in which at least one hydrogen in aryl is replaced by fluorine or trifluoromethyl, and A¹ is a group represented by formula (1-1) or formula (1-2).

R_{f}¹ to R_{f}⁷ in formula (1) are preferably independently 3,3,3-trifluoropropyl, 3,3,4,4,4-pentafluorobutyl, 3,3,4,4,5,5,6,6,6-nonafluorohexyl, tridecafluoro-1,1,2,2-tetrahydrooctyl, heptadecafluoro-1,1,2,2-tetrahydrodecyl, henicosafluoro-1, 1,2,2-tetrahydrododecyl, pentacosafluoro-1,1,2,2-tetrahydrotetradecyl, (3-heptafluoroisopropoxy)propyl, pentafluorophenylpropyl, pentafluorophenyl or α,α,α-trifluoromethylphenyl.

R_{f}¹ to R_{f}⁷ in formula (1) are further preferably independently 3,3,3-trifluoropropyl or 3,3,4,4,5,5,6,6,6-nonafluorohexyl.

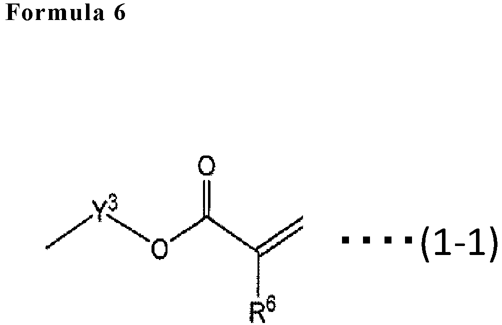

In formula (1-1), Y³ is alkylene having 2 to 10 carbons, and preferably alkylene having 2 to 6 carbons, and R⁶ is hydrogen or straight-chain or branched-chain alkyl having 1 to 5 carbons or aryl having 6 to 10 carbons, and preferably hydrogen or alkyl having 1 to 3 carbons.

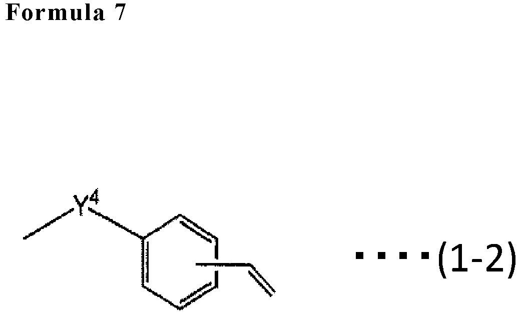

In formula (1-2), Y⁴ is a single bond or alkylene having 1 to 10 carbons.

Fluorosilsesquioxane derivative (1) is produced by a method described below. First, silicon compound (2) having a trifunctional hydrolyzable group represented by formula (2) is hydrolyzed and polycondensed in an oxygen-containing organic solvent in the presence of alkali metal hydroxide to produce compound (3) represented by formula (3).

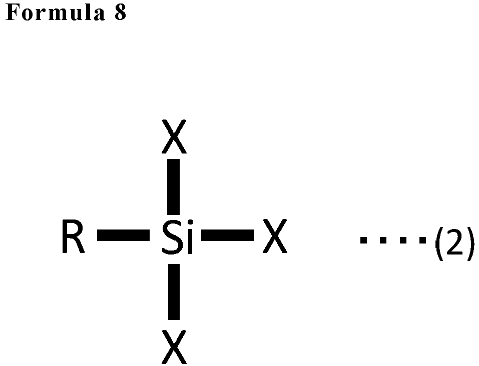

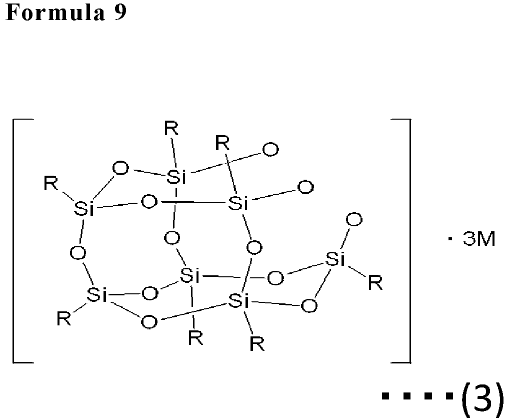

In formula (3), M is not particularly limited as long as M is alkali metal. Specific examples of such alkali metal include lithium, sodium, potassium and cesium.

R in formulas (2) and (3) independently corresponds to one group selected from R_{f}¹ to R_{f}⁷ in formula (1), and is straight-chain or branched-chain fluoroalkyl having 1 to 20 carbons in which at least one methylene may be replaced by oxygen; fluoroaryl having 6 to 20 carbons in which at least one hydrogen is replaced by fluorine or trifluoromethyl; or fluoroarylalkyl having 7 to 20 carbons in which at least one hydrogen in aryl is replaced by fluorine or trifluoromethyl, and X is a hydrolyzable group.

R in formulas (2) and (3) is preferably independently 3,3,3-trifluoropropyl, 3,3,4,4,4-pentafluorobutyl, 3,3,4,4,5,5,6,6,6-nonafluorohexyl, tridecafluoro-1,1,2,2-tetrahydrooctyl, heptadecafluoro-1,1,2,2-tetrahydrodecyl, henicosafluoro-1, 1,2,2-tetrahydrododecyl, pentacosafluoro-1,1,2,2-tetrahydrotetradecyl, propyl(3-heptafluoroisopropoxy), pentafluorophenylpropyl, pentafluorophenyl or a,a,a-trifluoromethylphenyl.

R in formula (2) is further preferably independently 3,3,3-trifluoropropyl or 3,3,4,4,5,5,6,6,6-nonafluorohexyl.

Next, fluorosilsesquioxane derivative (1) is obtained by allowing compound (3) to react with compound (4) represented by formula (4).

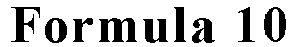

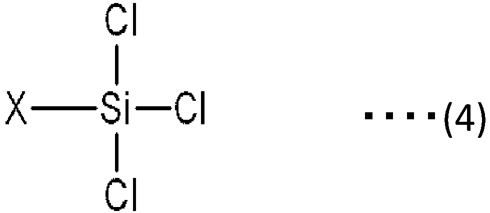

Group X in formula (4) is a group represented by formula (1-1) or formula (1-2).

Among such fluorosilsesquioxane derivatives (1), γ-methacryloxypropylhepta(trifluoropropyl)-T8-silsesquioxane represented by formula (5) is preferred.

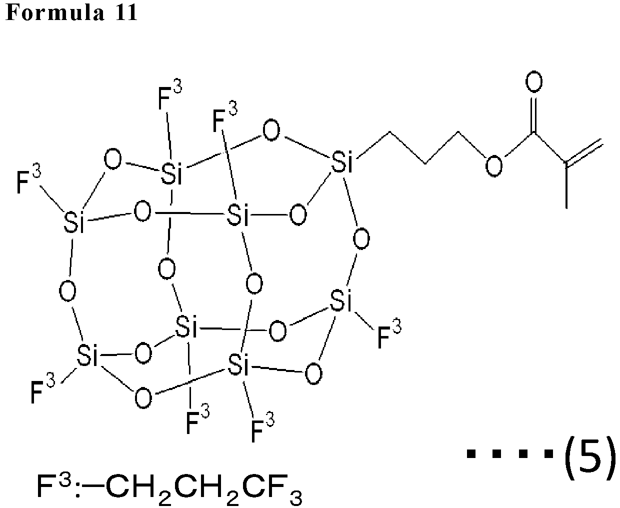

If fluorosilsesquioxane derivative (1) such as γ-methacryloxypropylhepta(trifluoropropyl)-T8-silsesquioxane is introduced into the coating layer, a stain-proof function of the coating layer can be further improved. Upon incorporating fluorosilsesquioxane derivative (1) into the photopolymerizable acrylic compounds having no urethane unit and containing the fluorine atom, fluorosilsesquioxane derivative (1) may be directly mixed with other photopolymerizable acrylic compounds having no urethane unit and containing the fluorine atom, or an oligomer produced by previously crosslinking and/or polymerizing fluorosilsesquioxane derivative (1) with photopolymerizable acrylic compounds having no urethane unit may be mixed with other photopolymerizable acrylic compounds having no urethane unit and containing the fluorine atom.

In general, fluorosilsesquioxane derivative (1) is copolymerized with one or more kinds of acrylate-based copolymerization components selected from monofunctional acrylate, bifunctional acrylate and polyfunctional acrylate to previously produce a polymer having a fluorosilsesquioxane derivative (1) unit, and the polymer is used as a part of the photopolymerizable acrylic compound having no urethane unit and containing the fluorine atom. In the above case, the polymer having the fluorosilsesquioxane derivative (1) unit is blended so as to have a proportion of 0.01 part by weight to 10 parts by weight, preferably 0.05 part by weight to 5 parts by weight, based on 100 parts by weight of the urethane acrylate.

As a photocurable acrylic monomer and/or oligomer having the fluorine atom in the molecule or the photopolymerizable acrylic compounds having no urethane unit and containing the fluorine atom to be used with fluorosilsesquioxane derivative (1), a compound generally called the photocurable acrylic monomer, for example, monofunctional acrylate such as (meth)acrylic acid and (meth)acrylic acid ester, bifunctional acrylate such as (poly)alkylene glycol di(meth)acrylate, and trifunctional or more functional acrylate such as pentaerythritol triacrylate, or the like can be used. Such a copolymerization component may be the oligomer obtained by polymerizing a reactive compound containing the photocurable acrylic monomer.

### Amount ratio of components (a1), (a2), (a3) and (a4)

An amount ratio of components (a1), (a2), (a3) and (a4) is appropriately adjusted according to a balance of stain-proof properties, water repellency, chemical resistance and sunscreen cream resistance of the surface protective layer. Components (a1), (a2), (a3) and (a4) preferably are present at proportions of 25 parts by weight or more 87.99 parts by weight or less, 1 part by weight or more and 20 parts by weight or less, 1 part by weight or more and 10 parts by weight or less, and 0.01 part by weight or more and 5 parts by weight or less, based on 100 parts by weight of photopolymerizable urethane acrylate mixture (A), respectively.

### Filler (B)

In addition to photopolymerizable urethane acrylate mixture (A), filler (B) can be blended to the photopolymerizable urethane acrylate composition of the invention. As filler (B) of the invention, an inorganic filler to be blended to a plastic molding compound or a coating material for extension, reinforcement, glazing, water repellency provision, smoothness provision, designability provision and the like can be used without limitation. As such filler (B), silica, zirconium oxide, barium titanate, titanium oxide, alumina or the like can be used, for example. Among the above compounds, a so-called fine grade filler is preferred in terms of not spoiling appearance of the surface protective layer. For example, a filler "MHI" made by Mikuni-Color Ltd. is preferred as filler (B) in terms of being excellent in dispersibility into the photopolymerizable urethane acrylate composition.

In the invention, a blending proportion of filler (B) of the invention is appropriately determined. Photopolymerizable urethane acrylate mixture (A) and filler (B) preferably are present at proportions of 60 parts by weight or more and 100 parts by weight or less, and 0 parts by weight or more and 40 parts by weight or less, based on a total of 100 parts by weight of photopolymerizable urethane acrylate mixture (A) and filler (B), respectively. Photopolymerizable urethane acrylate mixture (A) and filler (B) further preferably are present at proportions of 60 parts by weight or more and 90 parts by weight or less, and 10 parts by weight or more and 40 parts by weight or less, based on a total of 100 parts by weight of photopolymerizable urethane acrylate mixture (A) and filler (B), respectively.

### (C) Photopolymerization initiator

The photopolymerizable urethane acrylate composition of the invention further contains photopolymerization initiator (C). A kind and a blending amount of photopolymerization initiator (C) are not limited according to a conventional technique in photopolymerization of a photopolymerizable acrylic polymer. As photopolymerization initiator (C), various other commercially available products such as "IRGACURE" made by BASF SE (currently sold as "Omnirad" made by IGM Resins B.V.) can be used. As photopolymerization initiator (C), a polymer body of hydroxy ketone such as oligo{2-hydroxy-2-methyl-1-phenylpropaneone}, 1-hydroxydicyclohexyl phenyl ketone, 2-hydroxy-2-methyl-1-phenylpropane-1-one, 2,2-dimethoxy-1,2-diphenylethane-1-one, 1-{4(2-hydroxyethoxy)pheny1}2-hydroxy-2-methyl-1-propane 1-one, 2,4,6-trimethylbenzoyldiphenylphosphine oxide, bis(2,4,6-trimethylbenzoyl)phenylphosphine oxide or the like can be used, for example.

### Other additives

In addition to components (A), (B) and (C), an additive such as an antioxidant, a weather-resistant stabilizer, a toning agent and a diluent, which are generally blended to a coating material or a material of a film, can be further blended to the photopolymerizable urethane acrylate composition. A blending amount thereof is not limited as long as the amount is within the range in which a function of the surface protective layer is not reduced.

### Surface protective layer

The cured product of the photopolymerizable urethane acrylate composition containing photopolymerizable urethane acrylate mixture (A), filler (B), photopolymerization initiator (C), and other additives that can be blended when necessary forms the surface protective layer of the invention. The surface protective layer is laminated on one side of the polycarbonate base material film of the invention.

### Polycarbonate base material film

The polycarbonate base material film used in the invention is a monolayer or multilayer film or sheet mainly formed of a polycarbonate-based resin. As the polycarbonate-based resin constituting the polycarbonate base material film, a resin known as a material of the automotive interior and exterior parts can be used without limitation. As such a polycarbonate base material film, "Panlite (registered trademark)" made by TEIJIN LIMITED, "Iupilon Sheet" made by MITSUBISHI GAS CHEMICAL COMPANY, INC., "CARBO GLAS (registered trademark)" made by AGC POLYCARBONATE CO., LTD., or the like can be used, for example.

### Modified film

A thickness of the polycarbonate base material film of the invention is not particularly limited, but is ordinarily 100 micrometers or more and 500 micrometers or less, and preferably 200 micrometers or more and 400 micrometers or less. The photopolymerizable urethane acrylate composition in the solution state is coated on one side of such a polycarbonate base material film so as to obtain a coating thickness of ordinarily 1 micrometer or more and 30 micrometers or less and preferably 1 micrometer or more and 20 micrometers or less, and finally the cured product of the photopolymerizable urethane acrylate composition in the solution state is formed on one side of the polycarbonate base material film as the surface protective layer of ordinarily 1 micrometer or more and 30 micrometers or less and preferably 1 micrometer or more and 20 micrometers or less.

In formation of the surface protective layer, first, a solution obtained by diluting the photopolymerizable urethane acrylate composition containing photopolymerizable urethane acrylate mixture (A), photopolymerization initiator (C) and further, when necessary, filler (B) with a solvent when necessary is prepared. Then, the solution is coated on one side of the polycarbonate base material film, and after drying under appropriate conditions, a coated surface is irradiated with light energy rays such as ultraviolet light to cure the photopolymerizable urethane acrylate composition. Thus, the modified film of the invention is obtained.

A dilution method of the photopolymerizable urethane acrylate composition, a coating method of the photopolymerizable urethane acrylate composition in the solution state, irradiation conditions for the light energy rays and a drying method of the cured product of the photopolymerizable urethane acrylate composition are appropriately selected from publicly-known conditions for handling of a photopolymerizable coating material.

On a side of the surface protective layer of the modified film of the invention, all of the stain-proof properties, the water repellency, the chemical resistance and the sunscreen cream resistance derived from the surface protective layer of the invention are developed in a well-balanced manner. In addition, the modified film of the invention is also comparatively suitable for a complicated shape. Such a modified film of the invention is effective for surface modification of the automotive interior and exterior parts.

### Production of automotive interior and exterior parts

The automotive interior and exterior parts of the invention are automotive interior and exterior parts in which at least a part of a surface is coated with the modified film of the invention. As a method of producing the automotive interior and exterior parts of the invention, a method of allowing an automotive interior and exterior part material mainly formed of plastic to adhere to the modified film in a predetermined shape can be used without limitation. Specific examples thereof include film insert molding or laminate injection press molding in which the modified film is arranged in a mold and the mold is filled with a resin by injection molding, a film in-mold molding in which the modified film is preliminarily formed and then arranged in a mold and the mold is filled with a resin by injection molding, and a method combining double molding, sandwich molding or the like with the above molding methods.

The modified film of the invention is effective for the automotive interior and exterior parts, in general. Various automotive interior and exterior parts such as an instrument panel, a seat, a console box, a sun visor, a pillar trim, a door trim, a radiator grill, an emblem, various garnishes, a wheel cap, a grill illumination, covers inside and outside the vehicle can be produced, for example. Particularly valuable parts as such automotive interior and exterior parts of the invention include the instrument panel, the emblem, the radiator grill and various garnishes, which are required to have all of the stain-proof properties, the water repellency, the chemical resistance and the sunscreen cream resistance because such parts are used under an environment in which frequency at which humans touch the parts with hands and fingers is high.

### Examples

A modified film of the invention was produced according to procedures described below.

### Synthesis of γ-methacryloxypropylhepta(trifluoropropyl)-T8-silsesquioxane

Into a four-necked flask having an inner volume of 1 litter and equipped with a reflux condenser, a thermometer and a dropping funnel, trifluoropropyltrimetoxysilane (100 g), THF (500 mL), deionized water (10.5 g) and sodium hydroxide (7.9 g) were charged, and the resulting mixture was heated in an oil bath from room temperature to a temperature at which THF was refluxed while stirring the mixture with a magnetic stirrer. Stirring was continued for 5 hours from reflux start to complete a reaction. Then, the flask was pulled up from the oil bath, and left to stand overnight at room temperature, and then the flask was set to the oil bath again, and the mixture was heated and concentrated under constant pressure until a solid precipitated.

The product precipitated was obtained by filtration using a pressure filter equipped with a membrane filter having a pore diameter of 0.5 micrometer. Then, the solid obtained was washed once with THF, and dried using a dryer under reduced pressure at 80°C for 3 hours to obtain 74 g of a colorless powdery solid.

Into a four-necked flask having an inner volume of 1 litter and equipped with a reflux condenser, a thermometer and a dropping funnel, the obtained solid (65 g), dichloromethane (491 g) and triethylamine (8.1 g) were charged, and the resulting mixture was cooled down to 3°C in an ice bath. Then, γ-methacryloxypropyltrichlorosilane (21.2 g) was added thereto, and heat generation was confirmed to cease, and then the flask was pulled up from the ice bath, and the resulting mixture was aged as was at room temperature overnight. The resulting mixture was washed 3 times with deionized water, and then a dichloromethane layer was dehydrated over anhydrous magnesium sulfate to remove magnesium sulfate by filtration. The resulting filtrate was concentrated using a rotary evaporator until a viscous solid precipitated, and 260 g of methanol was added thereto, and the resulting mixture was stirred until a powdery state was formed. The resulting powder was filtrated using a pressure filter equipped with 5-µm filter paper, and the filtrate was dried at 65°C for 3 hours using a dryer under reduced pressure to obtain 41.5 g of a colorless powdery solid. GPC and ¹H-NMR measurement were carried out on the solid obtained to confirm formation of γ-methacryloxypropylhepta(trifluoropropyl)-T8-silsesquioxane represented by formula (5).

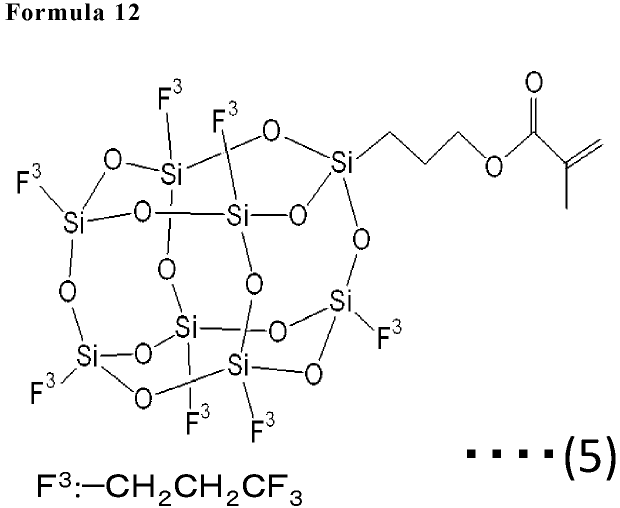

### Production of a photopolymerizable acrylate oligomer having a unit derived from γ-methacryloxypropylhepta(trifluoropropyl)-T8-silsesquioxane (a4-1)

Into a four-necked flask having an inner volume of 200 milliliters and equipped with a reflux condenser, a thermometer and a dropping funnel, 36.65 g of γ-methacryloxypropylhepta(trifluoropropyl)-T8-silsesquioxane obtained by the method described above, 18.33 g of methyl methacrylate (MMA), 27.49 g of 2-hydroxyethyl methacrylate (HEMA), 9.16 g of dimethyl silicone modified with a methacryloxy group at one end (FM-0721, molecular weight: about 6,300) and 106.4 g of 2-butanone (MEK) were introduced, and the flask was sealed with nitrogen. The flask was set to an oil bath kept at 95°C to allow the resulting mixture to be refluxed, and then subjected to oxygen removal for 10 minutes. Then, a solution in which 0.70 g of 2,2'-azobisisobutyronitrile (AIBN) and 0.08 g of mercaptoacetic acid (AcSH) were dissolved in 7.0 g of MEK was introduced thereinto, and polymerization was started while being kept at a reflux temperature. After polymerization was performed for 3 hours, a solution in which 7.00 g of AIBN was dissolved in 7.0 g of MEK was introduced thereinto, and polymerization was further continued for 5 hours. After completion of polymerization, 65 milliliters of denatured alcohol (Solmix AP-1, made by Japan Alcohol Trading Co., Ltd.) was added to the polymerization liquid, and then the resulting mixture was poured into 1300 milliliters of Solmix AP-1 to allow a polymer to precipitate. A supernatant was removed, and a product was separated by drying under reduced pressure (40°C, 3 hours, 70°C, 3 hours).

Into a four-necked flask having an inner volume of 200 milliliters and equipped with a reflux condenser, a thermometer and a septum cap, 15.0 g of the product, 0.015 g of MEHQ, 0.0263 g of DBTDL and 130 g of ethyl acetate were introduced, and the flask was sealed with nitrogen. The flask was set to an oil bath kept at 48°C, and was heated. Then, when a solution temperature reached 45°C, 15.9 g of acryloyloxyethyl isocyanate (AOI, made by Showa Denko K.K.) was introduced thereinto, and a reaction was started. After the reaction was performed for 6 hours, the temperature was reduced to room temperature, and 10.0 g of MeOH was introduced thereinto, and the reaction was completed. After completion of the reaction, 65 milliliters of Solmix AP-1 was added to the reaction mixture, and then 1300 milliliters of Solmix AP-1 was poured thereinto to allow a reactant to precipitate. A supernatant was removed, and the resulting material was dried under reduced pressure (40°C, 3 hours, 70°C, 3 hours) to obtain 11.8 g of a polymer including a γ-methacryloxypropylhepta(trifluoropropyl)-T8-silsesquioxane unit and having an acryloyl group in a side chain. A weight average molecular weight of the polymer determined by GPC analysis was 45,000, and a molecular weight distribution was 1.7.

### Preparation of a photopolymerizable urethane acrylate composition

As ultraviolet curing type urethane acrylic polymer (a1), an ultraviolet curing type urethane acrylic polymer "8BR-600" made by Taisei Fine Chemical Co., Ltd. was used. As polyfunctional acrylate compound (a2), a hexafunctional acrylate compound "KAYARAD DPCA-120" made by Nippon Kayaku Co., Ltd. was used. As fluorine-containing photopolymerizable acrylic compound (a3), "MEGAFAC RS75" made by DIC Corporation was used. As photopolymerizable acrylate oligomer having a unit derived from a fluorosilsesquioxane derivative (a4), a polymer containing the above-described γ-methacryloxypropylhepta(trifluoropropyl)-T8-silsesquioxane unit and having an acryloyl group in a side chain was used. As filler (B), zirconium oxide "MHI series FM-215M" made by Mikuni-Color Ltd. was used. As photopolymerization initiator (C), "Omnirad 127" made by IGM Resins B.V. was used. Further, as a diluent, isopropyl alcohol (IPA) was used. Components (a1), (a2), (a3), (B) and (C) were selected as shown in Table 1, and the components were mixed with each other at an amount ratio shown in Table 1 to obtain a coating liquid containing a photopolymerizable urethane acrylate composition in which the above components were favorably dispersed, at a concentration of 25% by weight.

### Production of modified film

Each of the above-described coating liquids was coated on one side of a 300 µm-thick polycarbonate base material film ("Panlite 2151" made by TEIJIN LIMITED) by using a wire bar coater No. 30 made by R.D.S. Webster Co., and the resulting material was dried at 80°C for 1 minute. Then, a photopolymerizable coating liquid was cured at integrated quantity of light: 1000 mJ/cm² by using a conveyor device for ultraviolet curing for 8 kW × 1 lamp, ESC-801G1 type, made by EYE GRAPHICS CO., LTD. Thus, 7 kinds of modified films in which a surface protective layer formed of an 11 µm-thick cured product of the photopolymerizable urethane acrylate composition was formed on one side of the polycarbonate base material film were obtained.

### Evaluation of modified film

The results of evaluation of the 7 kinds of modified films in terms of the following viewpoints and methods are shown in Table 1.

### (1) Oil repellency

Oil repellency of the surface protective layer of the obtained modified film to commercially available black oil-based ink was evaluated. A degree to which the black oil-based ink was repelled when a line was drawn with a Sharpie marker on a surface of the surface protective layer of the obtained modified film was judged according to the following criteria.
Sign: +: The ink is repelled and a track of the ink is visible in a dotted shape.
Sign: -: The ink is not repelled and the track of the ink is visible in a linear shape

### (2) Stain-proof properties

Removal easiness of the ink when a track of the ink adhering to the surface protective layer in (1) Oil repellency test described above was rubbed by reciprocation once using a nonwoven fabric (Dusper K-3 made by OZU CORPORATION) was judged according to the following criteria.
Sign: +: The ink is completely wiped off and no ink mark remains.
Sign: -: The ink is not completely wiped off and the ink mark remains.

### (3) Water repellency

A test piece (20 mm × 90 mm) cut out from the obtained modified film was pasted to a stainless steel plate (25 mm × 100 mm) so that a polycarbonate base material film side adhered thereto. In the above state, a water contact angle on an upper surface (surface protective layer surface) of the modified film was measured by applying distilled water for measuring nitrogen and phosphorus (made by KANTO CHEMICAL CO.,INC.) as probe water using an automatic contact angle meter DMs-400 (made by Kyowa Interface Science Co., Ltd.). The water contact angle is preferably 95° or more, and as the water contact angle is larger, higher water repellency is exhibited.

### (4) Sunscreen cream resistance

A commercially available sunscreen cream (Neutrogena ULTRA SHEER SUNSCREEN SPF45) was coated on a surface protective layer of a test piece (50 mm × 50 mm) cut out from the obtained modified film at a uniform thickness in an amount of 0.5 g/100cm². On a surface on which the sunscreen cream adhered, 2 sheets of white cloth and an aluminum plate were laminated, and 500 g of a weight was placed from above the aluminum plate. In the above state, a whole test object including the modified film was left to stand and heated in a constant-temperature bath at 55°C for 4 hours. After heating, the weight, the aluminum plate and the white cloth were removed. The sunscreen cream adhering to the surface protective layer was removed by rubbing the surface protective layer with a nonwoven fabric impregnated with a neutral detergent. A state of the surface protective layer from which the sunscreen cream was removed was judged according to the following criteria.
Sign: +: A state before coating of the sunscreen cream remains and neither deterioration nor deformation is observed.
Sign: -: A mark, dissolution unevenness or the like of the sunscreen cream is observed and deterioration or deformation is found.

### (5) Insect repellent spray resistance

Onto a surface protective layer of a test piece (50 mm × 50 mm) cut out from the obtained modified film, 0.05 g of a commercially available insect repellent spray (OFF! Deep Woods (registered trademark) Sportsman with 25% DEET) was uniformly sprayed. On a surface to which the insect repellent spray adhered, 2 sheets of white cloth and an aluminum plate were laminated. In the above state, a whole test object including the modified film was left to stand at room temperature (23°C) for 24 hours. Then, the aluminum plate and the white cloth were removed. A state of the surface protective layer on the occasion was judged according to the following criteria.
Sign: +: A state before contact with the insect repellent spray remains and neither deterioration nor deformation is observed.
Sign: -: A mark, dissolution unevenness or the like of the insect repellent spray is observed and deterioration or deformation is observed.

### (6) Surface hardness

Hardness of the surface protective layer was measured by pencil hardness measurement in accordance with JIS K 5600.

### (7) Scratch resistance

Haze (H₁) of a test piece (120 mm × 70 mm) cut out from the obtained modified film was measured using Haze Meter Model NDH-5000 made by Nippon Denshoku Industries Co., Ltd. The test piece in which haze H₁ was measured was installed in Model IMC-1557 Abrasion Resistance Tester C made by Imoto Machinery Co., LTD., and a surface protective layer thereof was subjected to abrasion treatment. Abrasion conditions were set as follows: use of steel wool #0000, a load: 400 g and 15 times of reciprocation. Haze (H₂) of the test piece after the abrasion treatment was measured according to the method identical to the method for measurement of haze H₁. A transparency change degree (ΔH) represented by the following equation was determined from the values of H₁ and H₂. As ΔH is smaller, higher scratch resistance is exhibited.

ΔH = |H₁ - H₂|

### (8) High-temperature and high-humidity resistance

Temperature and humidity inside a vehicle rise after stopping an engine of the automobile in a summer season, and therefore quality deterioration of automotive interior parts placed under a high-temperature and high-humidity environment is concerned. Then, occurrence of peeling between the surface protective layer and the polycarbonate base material under the high-temperature and high-humidity environment was evaluated. The modified film was left to stand under an environment of temperature of 50°C and humidity of 95% RH for 250 hours, and then a cross-cut test was conducted at an interval of 1 millimeter on the modified film in accordance with JIS K5600-6. A state of a lattice formed by cross-cuts was visually observed, and an adhesion state between the surface protective layer and the polycarbonate base material in the modified film was judged according to the following criteria.
Sign: +: A cut edge is smooth and the surface protective layer and the polycarbonate base material favorably adhere with each other.
Sign: -: Flaking is found in the lattice, and reduction in adhesion between the surface protective layer and the polycarbonate base material is observed.

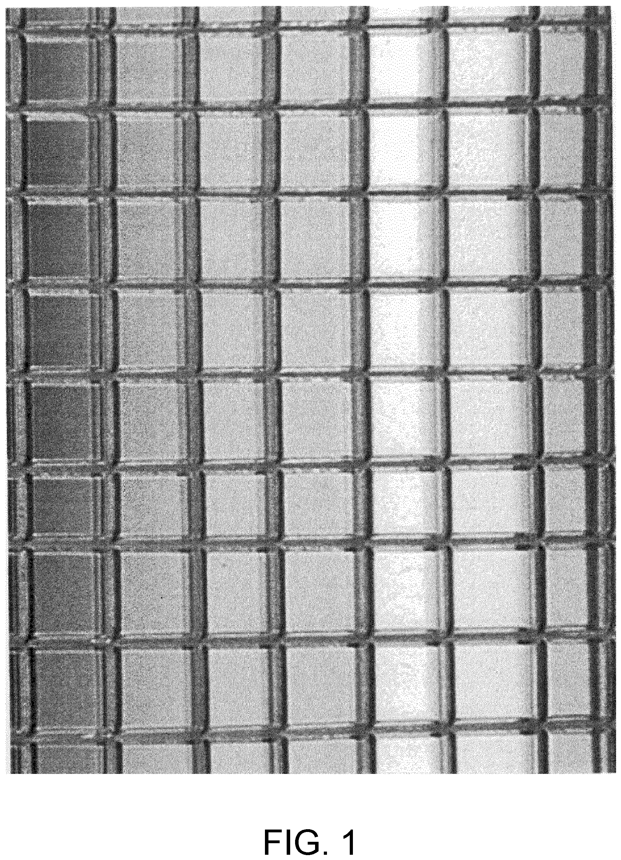

The modified film in Example 1 was judged as "+" according to the criteria. Fig. 1 shows a state of the lattice of the modified film obtained in Example 1. In Fig. 1, the lattice is found to be formed by a smooth groove having an approximately constant width.

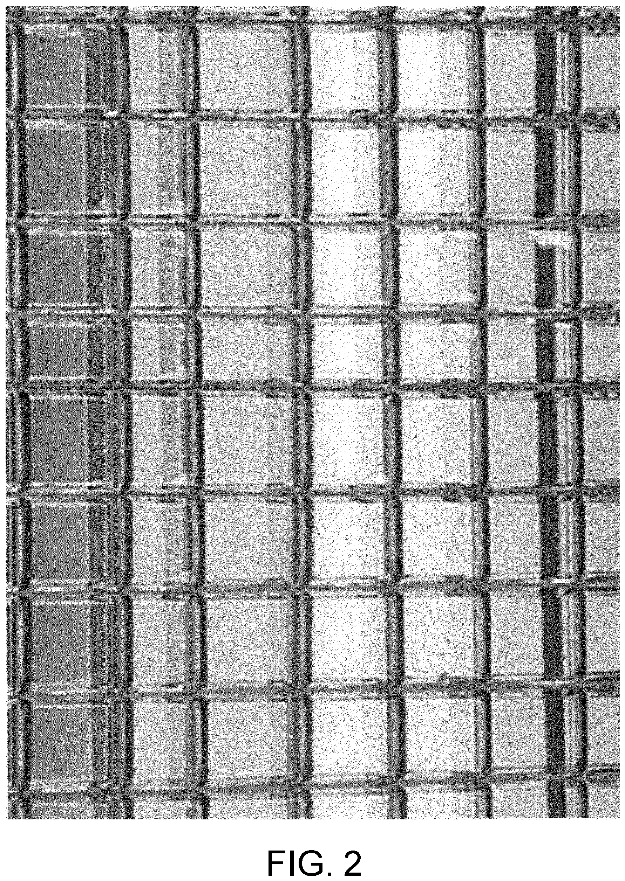

The modified firm in Comparative Example 1 was judged as "-" according to the criteria. Fig. 2 shows a state of the lattice of the modified film obtained in Comparative Example 1. In Fig. 2, unevenness is found in the groove forming the lattice and peeling of the surface protective layer is found in a portion surrounded by the lattice.

### (9) Formability

Assuming a step of forming automotive interior and exterior parts by using the modified film for a part of a formed member, the modified film was vacuum and pressure-formed into a dome-shaped thin shape by using a hemisphere mold having a rhombic streak under conditions in which an area of the modified film was extended to 200%. A surface protective layer of the dome-shaped modified film obtained was visually observed, and vacuum and pressure formability of the modified film was determined according to the following criteria.
Sign: +: The surface protective layer matches with a mold shape.
Sign: -: An abnormal shape that does not match with the mold shape is observed in the surface protective layer.

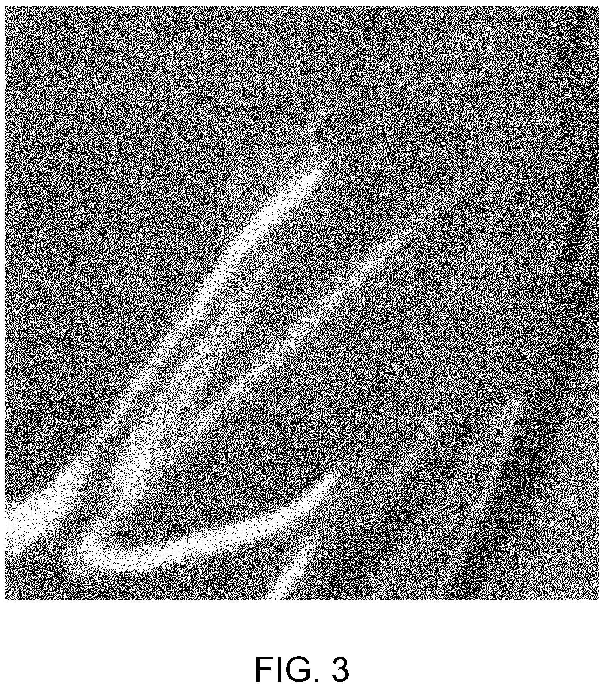

Fig. 3 shows a surface of a dome-shaped formed body obtained from the modified film in Example 1. The rhombic streak that matches well with the mold shape is reproduced on a surface of the formed body. A portion having no streak forms a smooth curved surface. The modified film in Example 1 can be understood as a material suitable for vacuum and pressure forming.

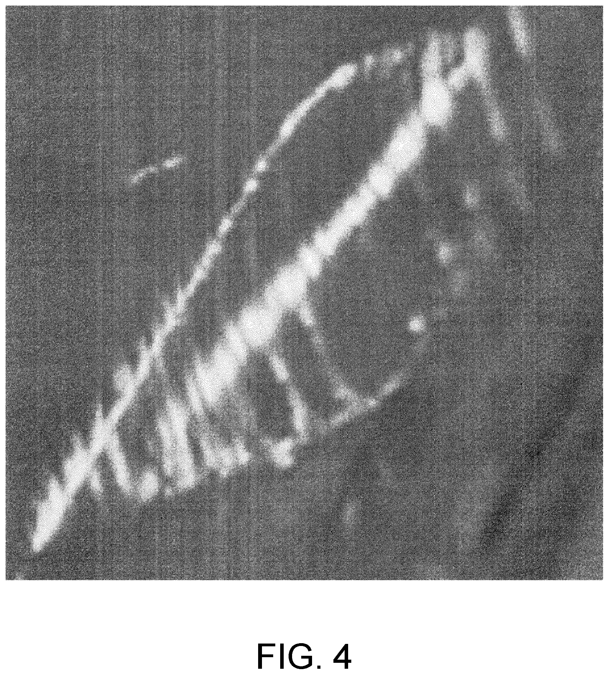

Fig. 4 shows a surface of a dome-shaped formed body obtained from the modified film in Comparative Example 2. Unevenness and wrinkles are observed on a whole surface. The modified film in Comparative Example 1 can be understood to have a problem in vacuum and pressure forming.

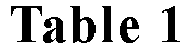

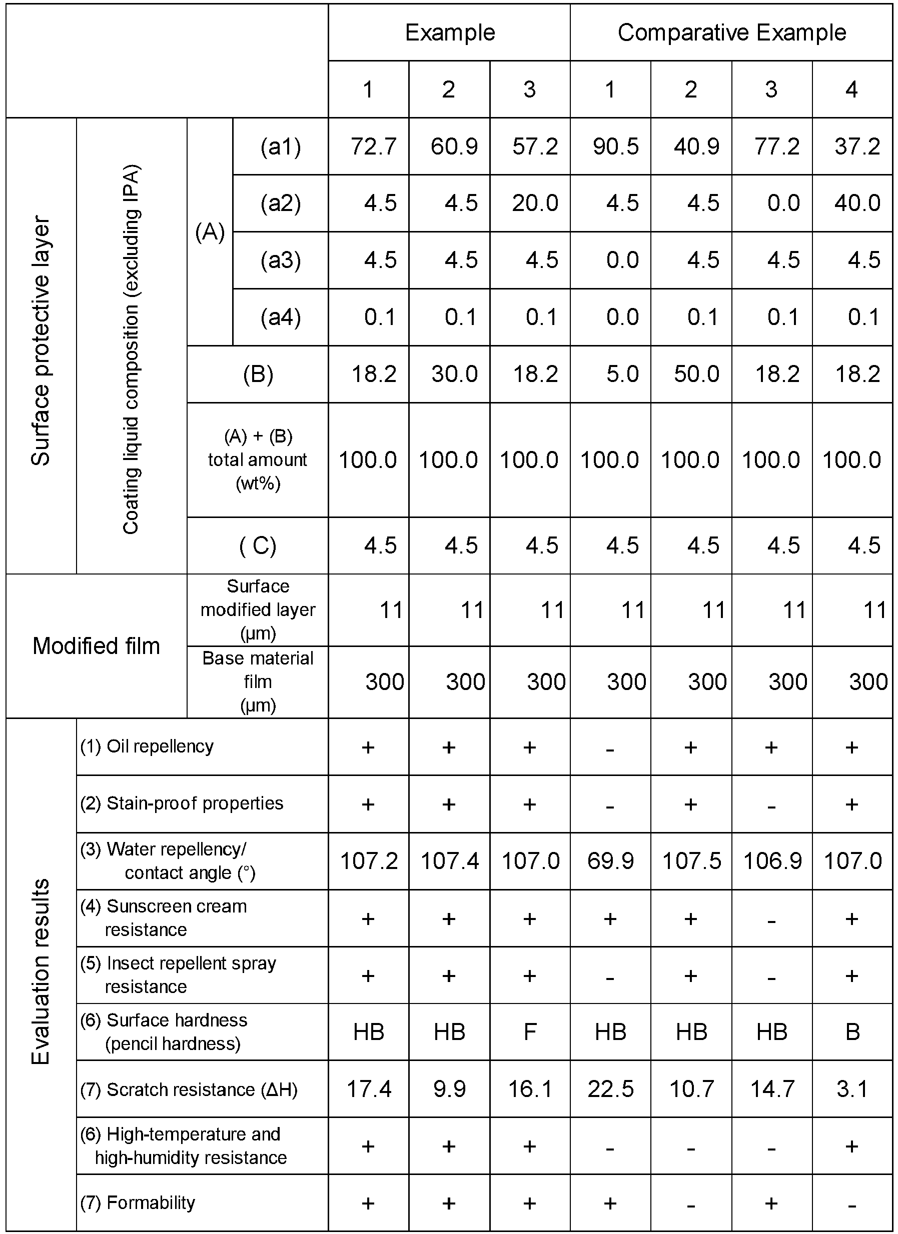

As shown in Table 1, the modified films produced in Example 1, Example 2 and Example 3 have the oil repellency, the stain-proof properties, the water repellency, the sunscreen cream resistance, the insect repellent spray resistance, the high surface hardness, the scratch resistance, the high-temperature and high-humidity resistance and the formability in a well-balanced manner, and are suitable as a surface protective member of the automotive interior and exterior parts.

In contrast, in the modified films produced in Comparative Example 1, Comparative Example 2, Comparative Example 3, and Comparative Example 4 in which the raw materials of the surface protective layers were changed, any one of the oil repellency, the stain-proof properties, the water repellency, the sunscreen cream resistance, the insect repellent spray resistance, the high surface hardness, the scratch resistance, the high-temperature and high-humidity resistance and the formability is significantly deteriorated, and the modified films are lack in practicality as the surface protective member of the automotive interior and exterior parts.

Thus, in the invention, the surface modified film for automotive interior and exterior parts having high practicality was able to be obtained only by arranging the surface protective layer produced from a carefully selected raw material on an appropriate base material film.

### Industrial Applicability

A modified film of the invention has oil repellency, stain-proof properties, water repellency, sunscreen cream resistance, insect repellent spray resistance, high surface hardness, transparency and scratch resistance, high-temperature and high-humidity resistance and formability in a well-balanced manner. Such a modified film of the invention is useful as a surface protective member of automotive interior and exterior parts required to have high performance and designability, such as an instrument panel, an emblem, a radiator grill and various garnishes, for example. According to the invention, the automotive interior and exterior parts that can meet further sophisticated requirements in recent years are expected to be able to be produced.

## Claims

1. A surface-modified film for automotive interior and exterior parts, in which a surface protective layer is laminated on one side of a polycarbonate base material film, wherein
the surface protective layer is a cured product of a photopolymerizable urethane acrylate composition,
the photopolymerizable urethane acrylate composition contains photopolymerizable urethane acrylate mixture (A), photopolymerization initiator (C), and further, when necessary, filler (B),
in the photopolymerizable urethane acrylate mixture, photopolymerizable urethane acrylate mixture (A) is present at a proportion of 60 parts by weight or more and 100 parts by weight or less, and filler (B) is present at a proportion of 0 parts by weight or more and 40 parts by weight or less, based on a total of 100 parts by weight of photopolymerizable urethane acrylate mixture (A) and filler (B),
photopolymerizable urethane acrylate mixture (A) contains photopolymerizable urethane acrylic polymer (a1), polyfunctional acrylate compound (a2), fluorine-containing photopolymerizable acrylic compound (a3) and photopolymerizable acrylate oligomer having a unit derived from a fluorosilsesquioxane derivative (a4) represented by formula (1), and
component (a1) is present at a proportion of 25 parts by weight or more and 87.99 parts by weight or less, component (a2) is present at a proportion of 1 part by weight or more and 20 parts by weight or less, component (a3) is present at a proportion of 1 part by weight or more and 10 parts by weight or less, and component (a4) is present at a proportion of 0.01 part by weight or more and 5 parts by weight or less, based on 100 parts by weight of photopolymerizable urethane acrylate mixture (A): 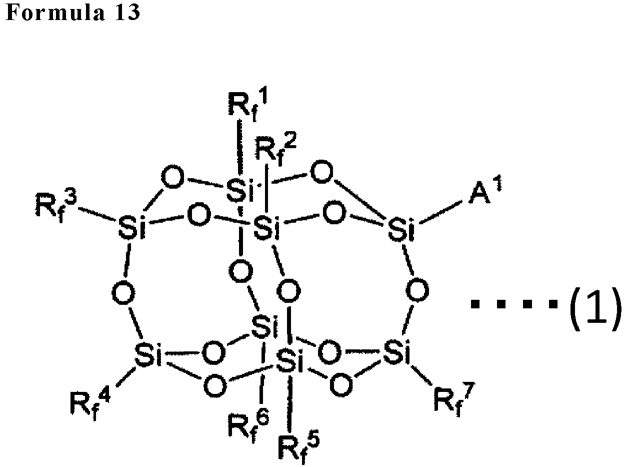 wherein, in formula (1), R_{f}¹ to R_{f}⁷ are independently straight-chain or branched-chain fluoroalkyl having 1 to 20 carbons in which at least one methylene may be replaced by oxygen; fluoroaryl having 6 to 20 carbons in which at least one hydrogen is replaced by fluorine or trifluoromethyl; or fluoroarylalkyl having 7 to 20 carbons in which at least one hydrogen in aryl is replaced by fluorine or trifluoromethyl, and A¹ is a group represented by formula (1-1) or formula (1-2): 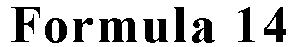 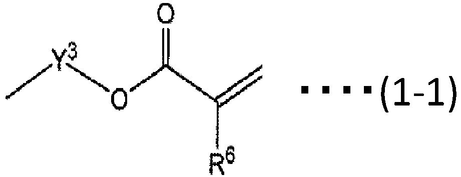 wherein, in formula (1-1), Y³ is alkylene having 2 to 10 carbons, and R⁶ is hydrogen or straight-chain or branched-chain alkyl having 1 to 5 carbons or aryl having 6 to 10 carbons, and 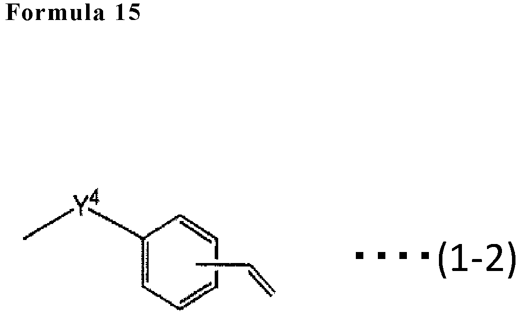 wherein, in formula (1-2), Y⁴ represents a single bond or alkylene having 1 to 10 carbons.

2. The surface-modified film for automotive interior and exterior parts according to claim 1, wherein, in the photopolymerizable urethane acrylate composition, photopolymerizable urethane acrylate mixture (A) is present at a proportion of 60 parts by weight or more and 90 parts by weight or less, and filler (B) is present at a proportion of 10 parts by weight or more and 40 parts by weight or less, based on a total of 100 parts by weight of photopolymerizable urethane acrylate mixture (A) and filler (B).

3. The surface-modified film for automotive interior and exterior parts according to claim 1 or 2, wherein component (a4) is a photopolymerizable acrylate oligomer having a unit derived from γ-methacryloxypropylhepta(trifluoropropyl)-T8-silsesquioxane represented by formulas (1-3):

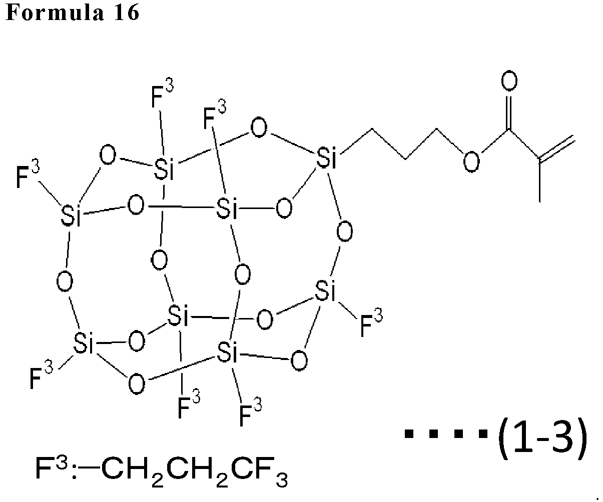

4. The surface-modified film for automotive interior and exterior parts according to any of claims 1 to 3, wherein the automotive interior and exterior parts are selected from an instrument panel, an emblem, a radiator grill and various garnishes.

5. Automotive interior and exterior parts, in which at least a part of a surface is coated with the surface-modified film for automotive interior and exterior parts according to any of claims 1 to 4.
